# EUROPÄISCHE PATENTANMELDUNG

(11) **EP 2 602 597 A1**
(43) Veröffentlichungstag der Anmeldung: **12.06.2013**
(21) Anmeldenummer: 12194189.2
(22) Anmeldetag: 26.11.2012
(51) Int. Cl.: G01G 19/56

(54) **Haushaltswaage**

(30) Priorität: 08.12.2011 DE 202011052235 U
(71) Anmelder: Beurer GmbH, 89077 Ulm (DE)
(72) Erfinder: Meternek, Werner, 89233 Neu-Ulm (DE); Merk, Ernst, 89264 Weißenhorn (DE); Schrade, Isabell, 89173 Halzhausen (DE); Schuster, Marion, 89185 Hüttisheim (DE)
(74) Vertreter: Fleck, Hermann-Josef

(57) **Zusammenfassung**

Die Erfindung bezieht sich auf eine Haushaltswaage mit einer eine Gewichtssertsorik (41) und eine Plattform (100) für ein Wiegegut aufweisenden Tragstruktur. Eine Funktionserweiterung wird dadurch erreicht, dass die Plattform (100) zumindest bereichsweise aus nach außen optisch und/oder fühlbar in Erscheinung tretendem steinartigem Material gebildet ist (Fig. 1).

## Beschreibung

Die Erfindung bezieht sich auf eine Haushaltswaage mit einer eine Gewichtssensorik und eine Plattform für ein Wiegegut aufweisenden Tragstruktur.

Eine Waage dieser Art ist in der DE 20 2008 008 194 U1 als bekannt ausgewiesen. Hierbei ist eine von einer Tragstruktur getragene Plattform in besonderer Weise mit einer Anzeigevorrichtung in Verbindung gebracht, um die angezeigte Information für einen Benutzer gut wahrnehmbar darzustellen und gleichzeitig dem Benutzer möglichst komfortable Nutzungsmöglichkeiten zu bieten.

Bei einer in der DE 20 2011 050 040 U1 gezeigten weiteren Haushaltswaage dieser Art ist auf einer Trägereinheit, und zwar beispielsweise auf einer Wiegegutaufnahme, eine beschreibbare Schreibfläche aufgenommen, womit der Funktionsbereich als Haushaltsgegenstand erweitert wird.

In der DE 20 2011 000 198 U1 ist eine Haushaltswaage gezeigt, bei der aus Betätigungskräften Energie für den Betrieb der Waage gewonnen wird.

Der vorliegenden Erfindung liegt die Aufgabe zugrunde, eine Haushaltswaage der eingangs genannten Art bereit zu stellen, die hinsichtlich ihrer Funktion im Haushalt weitergehend ausgestaltet ist.

Diese Aufgabe wird mit den Merkmalen des Anspruches 1 gelöst. Hierbei ist vorgesehen, dass die Plattform zumindest bereichsweise aus nach außen optisch und/oder fühlbar in Erscheinung tretendem steinartigem Material gebildet ist.

Mit dieser Ausgestaltung der Waage wird eine Oberflächenstrukturierung erhalten, mit der zum einen die physikalisch-optischen Eigenschaften gezielt in vielfältiger, flexibler Weise gewählt werden können und zum anderen, insbesondere bei einer Personenwaage, auf die die Haptik bzw. auf das Tastempfinden wirkenden Eigenschaften in bestimmter Weise vorgebbar sind. Dabei kann die Waage auf ihre Umgebung optisch gut wahrnehmbar abgestimmt werden.

Verschiedene Ausgestaltungsvarianten bestehen darin, dass die Plattform aus einem einzelnen Stein oder einer Vielzahl von Steinen gebildet ist.

Vielfältige Gestaltungsmöglichkeiten bezüglich optischer und anderer physikalischer oder auch geometrischer Eigenschaften, wie z. B. Temperatur oder Rauigkeit, werden dadurch erreicht, dass gleiche oder verschiedenartige Steine in einem ausgehärteten Bindemittel einen festen Verbund miteinander bilden. Beispielsweise können dabei mehr runde oder mehr spitze Formen auch in unterschiedlicher Körnung und unter Zumischung anderer Materialien, wie z. B. Bruchstücken von Muschelschalen, zur Anwendung kommen.

Hierbei bestehen vorteilhafte Ausgestaltungsmöglichkeiten darin, dass es sich bei dem steinartigen Material um natürliche Steine oder um künstliches steinartiges Material oder um ein Gemisch aus natürlichen Steinen und künstlichem steinartigem Material handelt. Die Eigenschaften lassen sich dadurch variieren, dass in der Plattform Steine unterschiedlichen Materials, unterschiedlicher Größe und/oder unterschiedlicher Oberflächenstruktur enthalten sind.

Verschiedene weitere vorteilhafte Ausgestaltungen ergeben sich dadurch, dass in der Plattform unterschiedliche Zonen ohne Steine und mit Steinen oder mit verschiedenen Steinstrukturen ausgebildet sind. Beispielsweise können dadurch Bereiche unterschiedlicher optischer oder haptischer Eigenschaften vorgegeben werden, so dass etwa bestimmte Bereiche hervorgehoben, in den Hintergrund gerückt oder mit den Füßen leicht ertastbar sind, wie z. B. Elektrodenbereiche, Anzeigebereiche, Wärmezonen oder spezielle Massagezonen.

Die Eigenschaften der Steine können vorteilhaft auch zur Lichtlenkung genutzt werden, beispielsweise infolge ihrer Oberflächenform, Oberflächenrauigkeit, Farbe, Lichtdurchlässigkeit und Größe, wie z. B. pulverförmige Körnungen bis hin zu Granulaten oder Kieselsteinen in der Größenordnung von unter 1 mm über den Millimeterbereich bis in den Zentimeterbereich.

Eine weitere vorteilhafte Ausbildung ergibt sich dadurch, dass die Plattform mit elektrisch leitenden Strukturen versehen ist.

Hierbei bestehen verschiedene vorteilhafte Ausgestaltungsvarianten darin, dass die elektrisch leitenden Strukturen Leitungen zu Elektroden zur Erfassung physiologischer Parameter, Leitungen zu Vibrationselementen, Leitungen zu Wärmeerzeugungselementen und/oder Leitungen zu Lichterzeugungselementen umfassen, wobei die Elektroden, Vibrationselemente, Wärmeerzeugungselemente und/oder die Lichterzeugungselemente z. B. ebenfalls in der Plattform angeordnet sind.

Eine weitere Ausgestaltung, die bei einer Personenwaage für Massagezwecke von Vorteil ist, besteht darin, dass das steinartige Material lose in einer Aufnahme aufgenommen ist, die von einer stabilen Tragplatte flächig abgestützt ist. Beispielsweise kann dabei die Aufnahme einen gel-artigen Unterbau aufweisen.

Für Massagezwecke besteht eine weitere vorteilhafte Ausgestaltung darin, dass eine Verteilung unterschiedlichen steinartigen Materials entsprechend Reflexzonen von Füßen vorgenommen ist.

Eine für die Reinhaltung vorteilhafte Gestaltung besteht darin, dass die Plattform auf ihrer das Wiegegut aufnehmenden Oberseite mit einer glatten Beschichtung versehen ist.

Variable Anpassungsmöglichkeiten werden dadurch erreicht, dass die Plattform auf der Tragstruktur austauschbar gehalten ist.

Für den Aufbau ist des Weiteren vorteilhaft, dass ein Anzeigebereich in die Plattform integriert ist.

Die Erfindung wird nachfolgend unter Bezugnahme auf die Zeichnungen näher erläutert. Es zeigen:
- Fig. 1: eine perspektivische Ansicht einer Personenwaage mit einer eine Kieselsteinplatte aufweisenden Plattform und einem Anzeigebereich bei abgeschalteter Anzeige,
- Fig. 2: die Personenwaage nach Fig. 1 aus einer anderen perspektivischen Ansicht bei eingeschalteter Anzeige,
- Fig. 3: eine Haushaltswaage in seitlicher perspektivischer Ansicht mit einer mit Füßen versehenen Tragstruktur, einer Plattform und einem Anzeigebereich,
- Fig. 4: eine auseinander gezogene Darstellung einer Haushaltswaage mit Plattform, Tragplatte, Bodenteil, Rahmenteilen und Anzeigeeinheit,
- Fig. 5: eine perspektivische Ansicht von oben mit Kieselsteinplatte, Tragplatte, Rahmenteilen, Bodenteil und Anzeigeabdeckung,
- Fig. 6: verschiedene Ausführungen von Kieselsteinplatten für eine Haushaltswaage und
- Fig. 7: eine Bodenansicht mit einer Bodenabdeckung, Füßen und Batterieabdeckung.

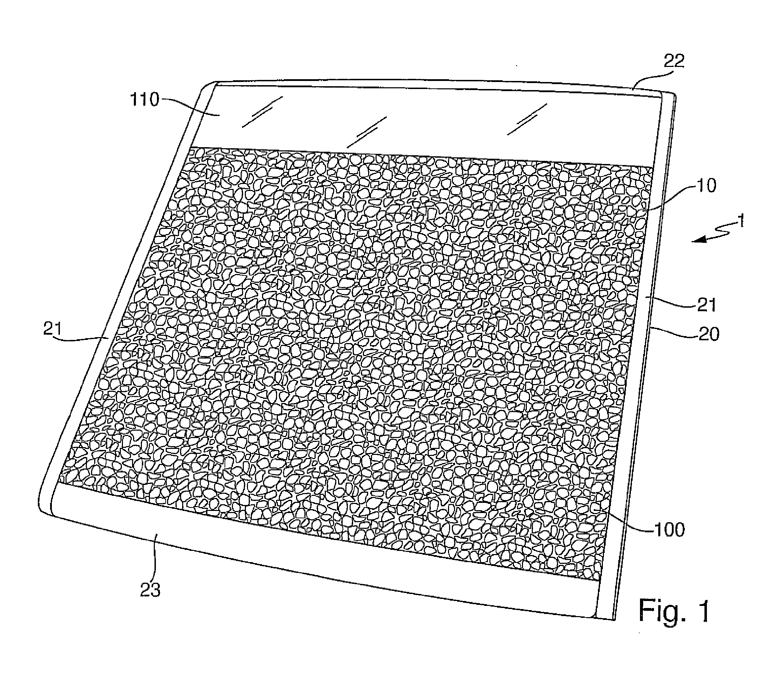

Fig. 1 zeigt eine Waage 1 bzw. Haushaltswaage, und zwar eine Personenwaage mit einer benutzerseitigen Oberfläche 10, die von einer Plattform 100 zum Aufnehmen eines zu wiegenden Benutzers, einem Anzeigebereich 110 und umgebenden Rahmenteilen, nämlich zwei Seitenteilen 21, einem Frontteil 22 und einem rückwärtigen Rahmenteil 23 eines Rahmens 20 gebildet wird.

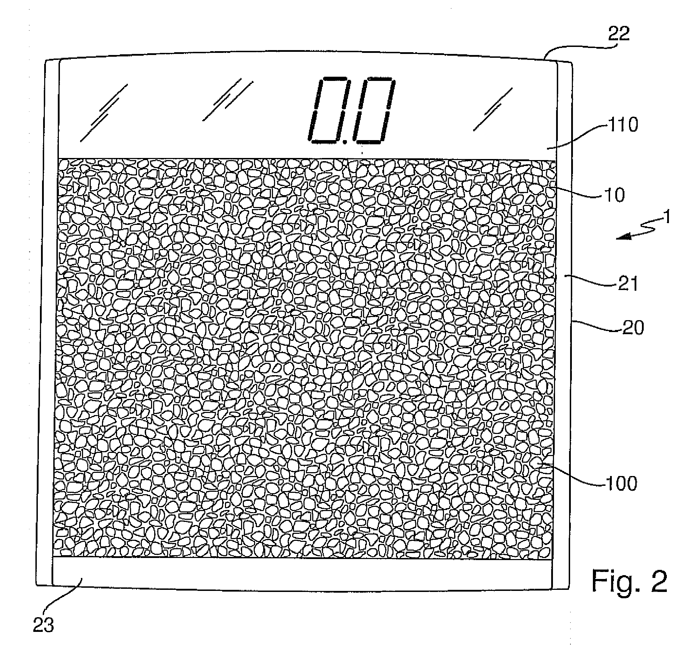

Die Plattform 100 weist eine Kieselsteinplatte mit in einem gehärteten Bindemittel eingebetteten Kieselsteinen auf. Fig. 1 zeigt den Anzeigebereich 110 bei abgeschalteter Anzeige, während Fig. 2 einen eingeschalteten Zustand der Anzeige wiedergibt.

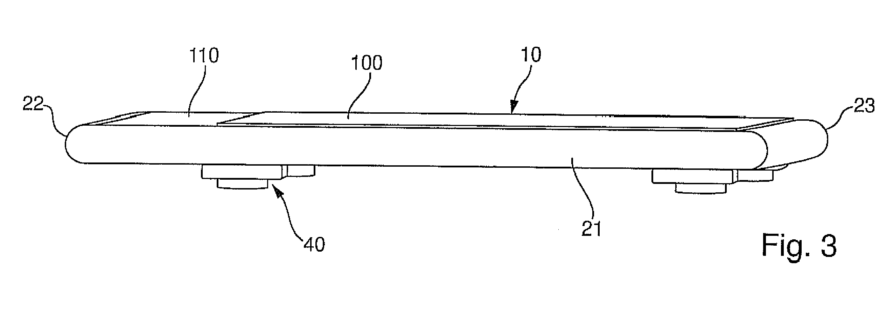

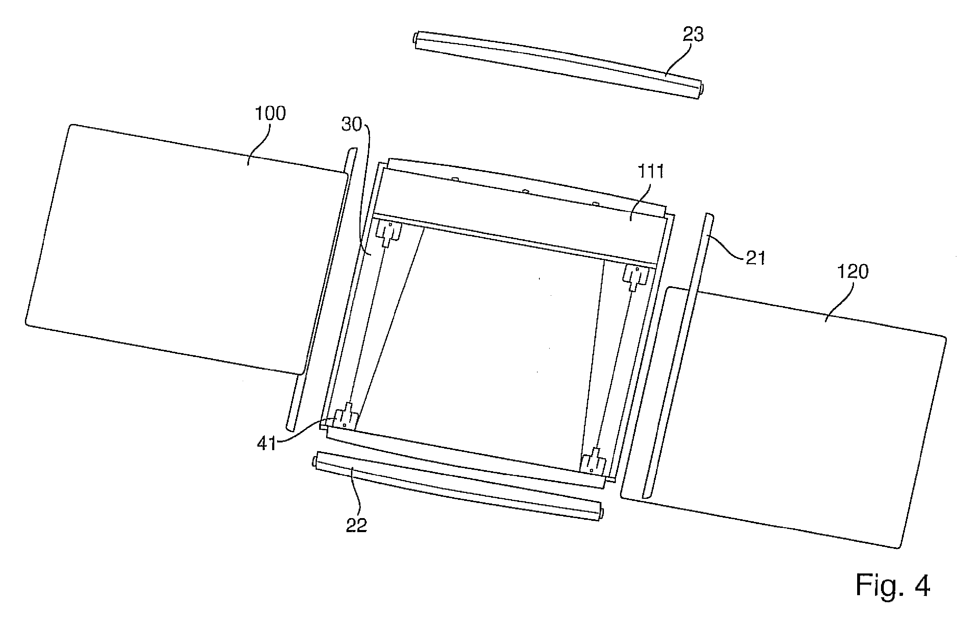

Fig. 3 zeigt eine Haushaltswaage in perspektivischer seitlicher Ansicht, wobei außer der Oberfläche 10 mit Plattform 100 und Anzeigebereich 110 auch ein seitlicher und frontseitiger Rahmenteil 21, 22 sowie Füße 40 zu sehen sind, in denen die Gewichtsmesseinheiten 41 (vgl. Fig. 4) aufgenommen sind. Auch hierbei ist die schematisch zu sehende Plattform 100 als Steinplatte ausgebildet, wobei die Struktur im Einzelnen nicht genauer dargestellt ist und es sich um eine Steinplatte aus einem einzelnen Stein oder aus einer mit einem Bindemittel zusammengehaltenen Vielzahl von Steinen handeln kann.

Fig. 4 zeigt eine Haushaltswaage in auseinander genommenem Zustand mit einer ebenfalls eine Steinplatte aufweisenden Plattform 100, einer die Steinplatte tragenden Tragplatte 120, einer Anzeigeeinheit 111, einem Bodenteil 30 mit Gewichtsmesseinheiten 41 sowie einem Rahmen 20 mit seitlichen Rahmenteilen 21, einem frontseitigen Rahmenteil 22 und einem rückseitigen Rahmenteil 23. Die Gewichtsmesseinheit 41 ist auch hierbei an bzw. in dem von der Unterseite an dem Bodenteil 30 angesetzten (in dieser Fig. nicht sichtbaren) Fuß 40 angeordnet. Die Rahmenteile 21, 22, 23 sind in ihren Eckbereichen beispielsweise mittels Schrauben, Rastverbindungen, Steckverbindung, Kleber oder Schweißen miteinander verbunden und halten die Tragplatte 120 mit der darauf abgestützten Plattform 100 an oder im Abstand zu dem Bodenteil 30, wobei zusätzlich zwischen der Unterseite der Tragplatte 120 und der Oberseite des Bodenteils 30 noch weitere Stützelemente angeordnet sein können.

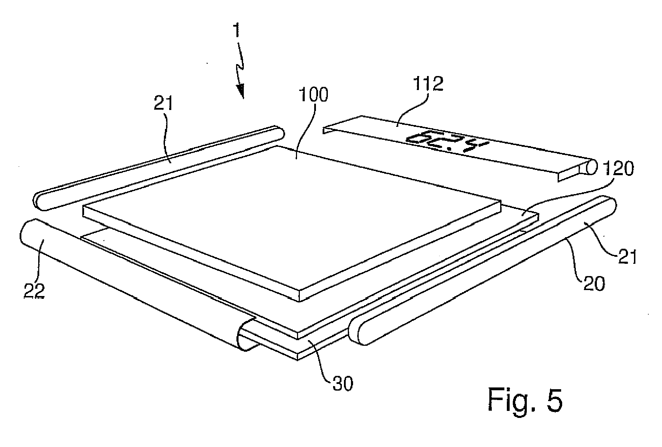

Fig. 5 zeigt eine weitere Darstellung einer Waage, insbesondere des Typs nach den Fig. 1 und 2, in auseinander gezogener Darstellung, wobei der Rahmen 20 mit den beiden seitlichen Rahmenteilen 21 sowie dem rückseitigen Rahmenteil 23 zu sehen sind, die den Bodenteil 30 und die Oberfläche 10 mit der auf der Tragplatte 120 aufgenommenen Plattform 100 und den Anzeigebereich 110 mit einer Anzeigenabdeckung 112 einfassen.

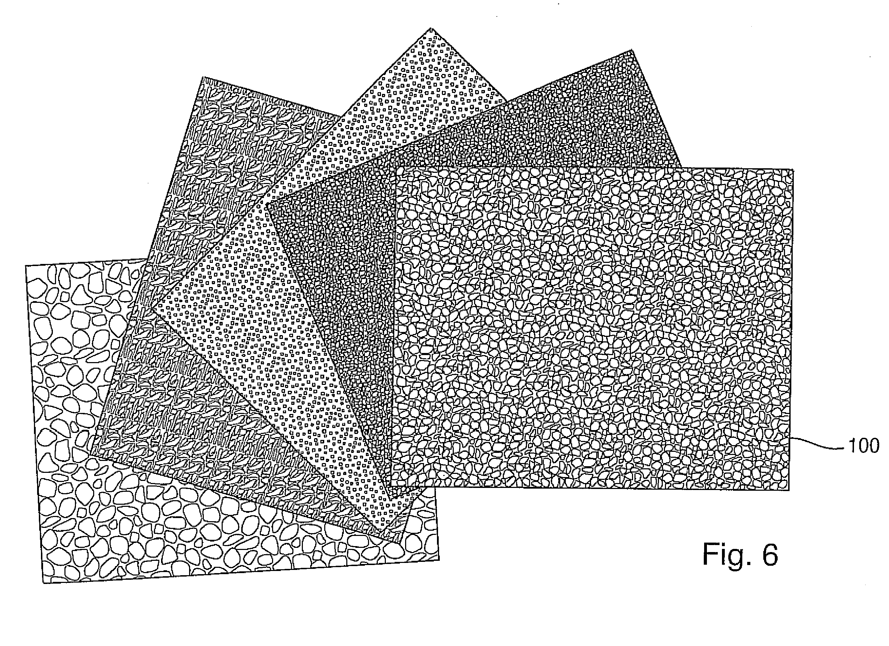

Die Fig. 6 zeigt Beispiele für aus verschiedenen Steinen aufgebaute Steinplatten, die für die Plattform 100 verwendet werden können. Bereits der optische Eindruck kann auch das Empfinden beim Betreten der Plattform einer Personenwaage mitbestimmen. Tatsächlich wird das Wärmeempfinden aber maßgeblich durch die Wärmeleitfähigkeit des Materials beeinflusst. Zudem wird durch die Materialwahl auch die Stimulation der Haut über den Tastsinn in unterschiedlicher Weise beeinflusst, so dass unterschiedliche Reize und Massageeffekte ausgelöst werden können. Vermöge der optischen Wirkung kann ein gewünschter Farbeffekt, die Helligkeit, die Lichtstreuung von glänzend bis matt sowie das Reflexions-, Absorptions- und/oder Transmissionsverhalten durch unterschiedliche Materialmischung gezielt hervorgerufen bzw. beeinflusst werden. Durch geeignete Mischung kann somit sowohl einem gewünschten Reflexionsverhalten als auch einem gewünschten Transmissionsverhalten Rechnung getragen werden. Mit der Steinstruktur lässt sich ein gezielter Abgleich auf eine Hinterleuchtung der Oberfläche 10 z. B. in dunkleren Räumen oder eine Nutzung von Umgebungslicht durch Reflexion durch Wahl der Materialien erreichen, wobei auch metallisch glänzende bzw. aus Metall bestehende Partikel zugemischt sein können.

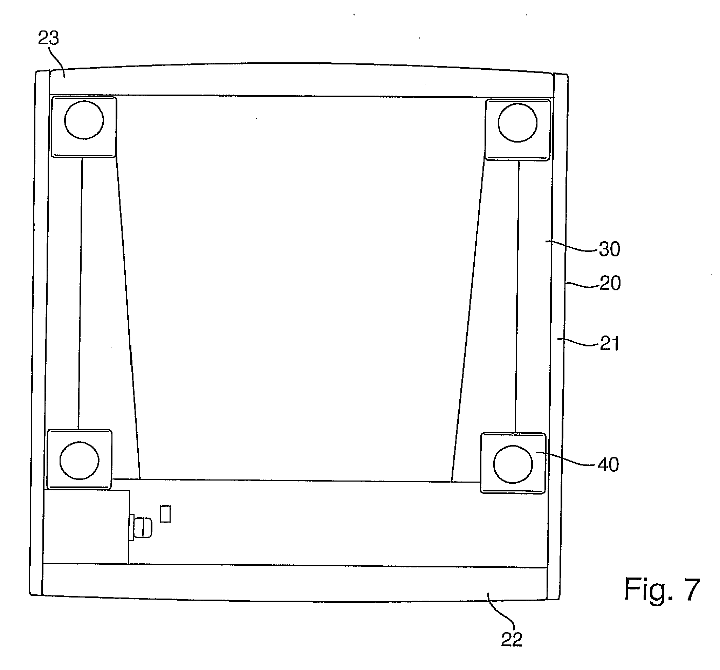

Fig. 7 zeigt eine Haushaltswaage von der Unterseite, wobei vier Füße 40 mit darin aufgenommenen Gewichtsmesseinheiten in den vier Eckbereichen an dem Bodenteil 30 unterhalb der Plattform 100 angeordnet sind. Unter dem Anzeigebereich 110 ist ein Abdeckabschnitt für die Anzeigeelektronik und gegebenenfalls weitere elektronische Schaltungsteile angeordnet, der auch eine Batterieabdeckung sowie eine Umschalteinheit z. B. für eine Gewichtsanzeige umfasst. Ferner ist der auch den Bodenteil 30 umgebende Rahmen 20 mit den seitlichen Rahmenteilen 21, dem frontseitigen Rahmenteil 22 und dem rückseitigen Rahmenteil 23 gezeigt.

Zu dem vorstehend dargestellten Grundaufbau gibt es im Zusammenhang mit der steinartigen Ausführung der Oberfläche, insbesondere der Plattform 100, zahlreiche Ausführungsformen, die unter anderem mit der Art der Haushaltswaage und deren Funktion zusammenhängen. Als Haushaltswaagen kommen neben den genannten Personenwaagen, für die die steinartige Ausführung der Oberfläche besondere Vorteile bietet, auch Küchen-, Diät-, Brief-, Paket- oder Kofferwaagen in Betracht, denen vermittels der Strukturierung mit den Steinen jeweils ihrer Funktion entsprechend spezifische Eigenschaften z. B. hinsichtlich Massageeffekt, optischer Funktion einschließlich Leuchtfunktion und Anzeigefunktion, Hygiene- und Reinigungsfunktion, Bedienungsfunktion, Messfunktion und z. B. Temperaturfunktion zugeordnet werden können.

So kann die Oberflächenstrukturierung der Platte durch Wahl der steinartigen Materialien gleichmäßig oder ungleichmäßig hinsichtlich optischer, taktiler oder Wärmewirkung ausgeführt sein, indem rundliche, unförmige, glatte, raue, gesplitterte, gehauene, geschliffene, geprägte, oder zufällig verteilte natürliche oder künstliche Strukturen geschaffen werden. Weitere Eigenschaften bestehen in gegossenen, losen, harten oder weichen Strukturen oder Kombinationen daraus. Optische Effekte lassen sich z. B. durch Wahl von Steinen mit Fossilieneinschlüssen zusätzlich gestalten. Weiche Strukturen können durch künstliche steinartige Materialien oder Zumischung solcher Materialien zu natürlichen harten Steinmaterialien oder durch weiche gummiartige oder gel-gefüllte Unterlagen bewirkt werden. Solche Eigenschaften können beispielsweise durch die Tragplatte 120 unterstützt oder bewirkt werden. Spitze Strukturen lassen sich z. B. durch körniges bzw. gesplittertes oder gebrochenes Material und/oder durch Zumischung von definiert gebrochenen Muschelschalen erzielen.

Durch Ausgleichsschichten kann z. B. die Druckverteilung auf die Wiegefläche gleichmäßig oder gezielt ungleichmäßig verteilt werden, wozu z. B. als Ausgleichsschichten Materialien wie Polyurethan-Schaum mit unterschiedlichen Raumgewichten und Stauchhärten oder Gele, wie Technogel mit unterschiedlichen Viskositäten und in unterschiedlicher Mengenverteilung verwendet werden können. Als Tragplatten kommen auch harte Platten aus Glas, Metall, Kunststoff oder Stein in Betracht oder die Tragfähigkeit kann von der Plattform 100 selbst bewirkt sein, beispielsweise bei genügend tragfähigem Bindemittel oder mittels Verbundschichten.

Zur Herstellung der Steinplatte kann als Bindemittel ein z. B. mittels Luft- und/oder UV-Einwirkung härtbares Material, insbesondere Kleber, verwendet werden. Als Verarbeitungsarten kommen Formen, Pressung, Trocknung, Vakuumbearbeitung, Plasma-Oberflächenvorbehandlung, Primärauftrag zur besseren Haftung bzw. Verbindung und Bearbeitung des Steinmaterials und der fertigen Platte mittels Bruch-, Press-, Hau- und/oder Schneidbearbeitung zum Trennen und für die Formgebung in Betracht, wie an sich beim Formenbau bekannt. Die Oberflächenbehandlung des Steinmaterials oder der fertigen Platte kann mittels Sandstrahlen, Wasserstrahlen, Bürsten und Reinigen erfolgen. Befestigungselemente und Halter können von Hand oder durch automatische Bestückung an der Steinplatte angebracht bzw. eingearbeitet werden, um diese an der Tragstruktur der Waage anzubringen. Zudem können Aufnahmen für Heizelemente, Lichtquellen, Sensoren und/oder Aktoren wie Vibrationseinheiten oder Gewichtsmesseinheiten sowie auch elektrische Leitungsverbindungen und Elektroden eingebracht werden.

Typische Basismaterialien für die Steinplattenherstellung sind neben den vorstehend genannten Materialien auch Stein-Komponenten, Einkomponenten- oder Zweikomponenten-Kleber, Beton- bzw. Mörtelmischungen, Einkomponenten- oder Zweikomponenten-Kunststoffe. Außerdem kommen Hilfsstoffe wie Farb-, Glanzmittel, Oberflächenbeschichtungen aus speziellen Kunststoffen zum Erzielen gewünschter Effekte, wie z. B. Antirutschwirkung, wasserabweisende Wirkung, gute Reinigungsfähigkeit, Glanzeffekte in Betracht. Die Steine selbst können aus unterschiedlichen Materialien bestehen, wie z. B. Kieselsteine, Bruchsteine und/oder künstlich erzeugte Steine, wie Keramiksteine, Kunststoffspritz-, Guss- oder Tiefziehmaterialien in Ein- oder Mehrkomponentenaufbau und unterschiedlichen Farbstrukturen. Natursteine können des Weiteren auch Granit, Marmor, Quarzit, Sandstein, Kalkstein, Schiefer, Ton, kristallines Material sein, womit auch besondere Lichteffekte erzielt werden können. Dabei sind auch lichtleitende oder Licht gerichtet reflektierende Steine bzw. Steinsplitter zur Beimischung geeignet, wobei auch Diamantstein, Bernstein, Jade, Topas oder Nachahmungen derselben sowie Keramiken in Betracht kommen, wodurch unterschiedliche Oberflächeneigenschaften erzeugt werden können. Die Eigenschaften lassen sich dabei durch Wahl unterschiedlicher Größen und Oberflächenform sowie Mischungsverhältnisse und Steinen unterschiedlicher Art, Form und Größe sowie tragendem Bindematerial variieren, wobei die Größe z. B. zwischen 1 und 12 mm, beispielsweise zwischen 4 und 10 mm gewählt wird.

Bei einer Ausgestaltung sind die Tragstruktur der Waage und die Steinplatte mit Verbindungsmitteln ausgerüstet, die einen Austausch der Steinplatten ermöglichen, um eine geeignete Anpassung in den z. B. optischen oder hygienischen Eigenschaften zu ermöglichen oder eine verschlissene Plattform 100 zu erneuern. Hierfür kann z. B. der Rahmen einfach auseinandernehmbar und wieder zusammenfügbar ausgebildet sein.

Geeignete Materialien für die Tragelemente der Tragstruktur, wie der Tragplatte 120, sind Pressglas, Metallplatten, Holzplatten, Kunststoffplatten oder dgl. in abgestimmter Dicke und Beschaffenheit.

Mittels der Steinplatte und einer flachen Tragstruktur lässt sich vorteilhaft eine flächige, flache Bauweise der Waage erzielen, wobei in die Steinplatte verschiedene Funktionen integriert sind. Eine gute Reinigbarkeit und Schmutzabweisung kann durch eine Oberflächenbeschichtung, wie z. B. eine Nano-Beschichtung und/oder mit antibakteriell wirkenden Substanzen erzielt werden. Ferner bestehen verschiedene Ausführungen der Oberfläche in wasserabweisenden, rutschhemmenden, wärmenden, antireflektiven, glänzenden, antistatischen, elektrisch isolierenden oder leitfähigen Eigenschaften, die durch Auftragen bzw. Aufsprühen von Lacken, Klebstoffen, kombinierte Beschichtungen z. B. mit thermischem Aushärten oder durch UV-Aushärten oder lediglich durch Lagern erzielt werden können. Ist die direkte haptische bzw. taktile Wirkung der Waagenoberfläche auf die Haut nicht erforderlich oder gewünscht, kann auch eine auf der Oberfläche glatte, das optische Erscheinungsbild der steinartigen Struktur praktisch nicht beeinflussende Beschichtung aufgetragen werden, wie z. B. bei Küchenwaagen, Diätwaagen, Briefwaagen oder dgl.. Für die Hygiene bzw. Reinhaltung sind wasserabweisende bzw. wasserdichte Schichten oder steinartige Oberflächen, die durch Bürsten leicht gereinigt werden können, von Vorteil. Zur Hygiene können auch spezielle Materialien wie Metalle, Salze, Chemikalien, die in den betreffenden Steinen vorhanden sind oder durch Oberflächenauftrag zugesetzt werden, vorteilhaft verwendet werden, die z. B. antibakteriell oder antifungizid wirken. Insbesondere bei nicht glatten Oberflächen kann eine Reinigungswirkung auch mittels einer zusätzlich eingebauten Vibrationseinrichtung bewirkt werden, die daneben auch für Massagezwecke verwendet werden kann. Gelöste Schmutzbestandteile können dann leicht z. B. mittels Bürsten beseitigt werden.

Mittels der Steine kann bei Personenwaagen an der Fußunterseite entsprechend den Reflexzonen gezielt ein Massageeffekt bereits durch die Verteilung unterschiedlicher Steinmaterialien erzielt werden. Entsprechende Effekte lassen sich auch auf anderen Hautbereichen erzielen, wozu auch andere Waagentypen genutzt werden können. Um die Massagewirkung zu verstärken, ist bei einer alternativen Ausführung die Waage mit Vibrationselementen, wie Piezoelementen, Membranmotoren, Schwingmotoren mit Unwucht oder anderen schwingungserzeugenden Aktoren ausgestattet. Piezoelemente können daneben auch als Gewichtssensoren genutzt werden. Die Größe des Massagebereichs und der Massagerichtung kann unterschiedlich gestaltet sein. Um Energie zu sparen, sind kleine Massageflächen und Bewegungen z. B. in zwei Richtungen zu bevorzugen, während umfangreichere Massageflächen und dreidimensionale Bewegungen (XYZ) entsprechend mehr Energie benötigen. In Verbindung mit der Steinstruktur lassen sich vielfältige Massageeffekte erzielen, wobei durch dynamische Lagerung der steinartigen Massageoberfläche die Massagewirkung gesteigert werden kann. Verschiedene Ausgestaltungsvarianten kommen dabei in Betracht: teilelastische Waagenfüße, wie z. B. in DMS-Waagen mit z. B. vier Füßen; elastische, schaumartige bzw. gel-artige Trageinheit; eine Mechanik mit Hebel-, Dreh-, Rotier-, Schiebe-, Schwenk- oder Klappelementanordnung zum Bewirken einer gewünschten Massagehöhe bzw. Massageintensität mit eingebauter oder separater Antriebseinheit bzw. Schwingeinheit; Nutzung eines Kippeleffekts, das heißt Erzeugung einer unsicheren Standposition mit die Körperstellung störenden leichten Bewegungen, wobei ein mechanisch bedämpfter oder aber fester Teil der Steinplatte bzw. Plattform unter der oder den Reflexzonen ausgebildet ist; aktives Lagerelement mit integrierter Antriebseinheit. Dabei werden die Massageart und die die Massage erzeugenden Kräfte bzw. Intensitäten sowie Bewegungsrichtungen und der zeitliche Massageablauf auf den jeweiligen Anwendungsfall abgestimmt, wobei des Weiteren eine Mess-, Steuer-, Auswerte-, Bedien-, bzw. Anzeigeeinheit vorteilhaft unter Steuerung mittels Mikroprozessor und Programmspeichern vorhanden ist/sind.

Eine zusätzliche Wirkung, insbesondere auch Massagewirkung, kann mittels Temperatureffekten erzielt werden, wobei Steine mit unterschiedlichem Wärmeleitvermögen auch gemischt mit unterschiedlicher Körnung bzw. Oberflächenform eingesetzt werden können. Zudem können zusätzlich Heizelemente zur Anwendung kommen, die mittels Temperatursteuerung oder Temperaturregelung betrieben werden, um z. B. zeitliche und/oder örtliche Temperaturänderungen zu bewirken oder aber auch nur eine kalte Steinplatte in gewünschtem Maße vorzuwärmen. Die Temperatur kann dabei z. B. optisch durch Temperaturumschlag von Steinmaterialien entsprechender Ausbildung oder von temperaturempfindlichen Lackschichten dem Benutzer vermittelt werden. Als wärmende Elemente kommen z. B. Thermoplast-Kunststoffschichten, beispielsweise einer Mindestmaterialstärke von 1 bis 2 mm oder Heizelemente wie Folien, Heizkordel, Heizmatte, Heizdrähte, Halbleiter oder PTC- bzw. NTC-Elemente in Betracht. Die Heizung kann bediener- bzw. zeitabhängig gesteuert und z. B. auch vorprogrammiert werden. Dabei ist auch eine Schnellheizung möglich. Für die Energieversorgung wird die bei der Waage ohnehin vorhandene Energieversorgung genutzt, vorteilhaft aber eine Versorgung bzw. unterstützende Versorgung aus dem Stromnetz. Dies ist besonders vorteilhaft, wenn Steinplatten erhöhter Wärmespeicherkapazität zur Anwendung kommen, die z. B. eine Dicke von bis zu 1 cm besitzen können, womit auch entsprechend große Zeitverzögerungen für die Temperaturangleichung auftreten. Die Temperatursteuerung kann auch mit einer Vibrationsmassage einhergehen.

Die optischen Effekte können mittels in der Waage, insbesondere der Plattform 100 und/oder dem Rahmen 20 und/oder der Tragplatte 120 eingebauter Lichtquellen, wie z. B. LEDs, Lampen, EL-Folien, Gasentladungselementen oder dgl. ergänzt werden. Hierbei kann die unterschiedliche Wirkung von Komponenten der Steinplatte vorteilhaft genutzt werden, z. B. können lichtleitende Bindematerialien, spiegelreflektierende, streuende, durchscheinende Steine und reflektierende Rahmenteile genutzt werden. Auch können Leuchtsteine in einheitlichen oder unterschiedlichen Farben Reflexzonen signalisieren und auf den Ablauf des Wiegevorgangs hinweisen oder Trends bei Gewichtsänderungen anzeigen. Dabei können Beleuchtungselemente in die Steinplatte eingegossen, eingeklebt, von der Rückseite oder dem Rand her in vorgesehene Vertiefungen eingesteckt oder mittels Leuchtbändern angebracht werden. Die Lichtquellen können dabei in gleichmäßigen oder unterschiedlichen Abständen angeordnet bzw. gruppiert werden. Durch Einsatz von transparenten oder transluzenten Klebern, Vergussmassen können Konturabbildungen erzeugt werden. Seitlich eingeleitetes Licht kann durch definiert eingelagerte Steine innerhalb der Steinplatte verteilt und an gewünschten Stellen aus der Oberfläche der Steinplatte geleitet werden, so dass die Waagenposition einem Benutzer auch bei dunkler Umgebung angezeigt wird. Dies ist z. B. vorteilhaft, wenn die Waage etwa in einem Bad, einer Küche oder im Büro in einem Boden oder einer Wand versenkt angeordnet ist. Auch flache Waagen sind stets sicher erkennbar.

Die Gewichtssensorik kann z. B. bei Ausbildung mit piezoresistiven Gewichtssensoren nicht nur als Signalsensoren für die Gewichtsmessung arbeiten, sondern auch durch gezieltes Aufschalten von Spannungsimpulsen als Aktoren fungieren, um eine Mikrovibration für Massagezwecke, insbesondere Fußreflexzonenmassage zu bewirken oder zu unterstützen. Durch definiertes Ansteuern der z. B. an den vier Ecken platzierten Gewichtsmesseinheiten 41 können spezielle Massagearten erzeugt werden, wie z. B. rollierend, diagonal, zufallsgesteuert, gleichzeitig angeregt, abwechselnd, stoßartig oder dgl.. Je nach Aufbau der Tragstruktur und der Plattform 100 sowie der Aktoren und aufgewandter Energie können damit unterschiedliche Massageeffekte bewirkt werden.

Unterschiedlich schwere Steinplatten können sich auch unterschiedlich auf den Ablauf der Gewichtsmessung auswirken, da die physikalische Trägheit sich auf das Dämpfungssystem auswirkt und z. B. beim Wiegen von Flüssigkeiten mittels einer Haushaltswaage zu einer schnelleren Schwingungsdämpfung und damit schnelleren Gewichtsmessung führt. Damit können auch vorhandene elektronische Filter vereinfacht und erhöhte Messgenauigkeiten erzielt werden.

Für die Gewichtssensorik kommen neben DMS-Gewichtssensoren und piezoresistiven Gewichtssensoren auch kapazitive Gewichtssensoren in Betracht, die mittelbar und/oder unmittelbar mit der Tragstruktur oder der Plattform 100 in mechanische Verbindung gebracht sein können.

Zur Steuerung der Gewichtsmessung mit Erfassung und Auswertung sowie der Anzeige ist eine Steuerungseinrichtung vorhanden, die in der Waage 1, beispielsweise unterhalb des Anzeigebereichs 110, oder aber außerhalb der Waage angeordnet ist, wobei eine Signalübertragung drahtgebunden oder drahtlos z. B. über Funk, Infrarotschnittstelle oder Ultraschallschnittstelle erfolgt. Dabei kann die Steinplatte selbst für die Anzeige herangezogen werden, wobei der Anzeigebereich 110 im Bereich der Steinplatte bzw. Plattform 100 liegt. Die Steuereinrichtung kann in unterschiedlicher Weise mit einem oder mehreren Mikrocontrollern, ASICs, FPGA oder dgl. aufgebaut sein und weist vorteilhaft Speichereinheiten zum Speichern von Daten und Programmen auf, wobei auch Vorgabedaten z. B. für Massageabläufe oder Beleuchtungselementsteuerungen oder Kalibrierdaten hinterlegt sein können. Die Waage 1 kann zudem eine Sensorik aufweisen, die z. B. mittels IR-Strahlung, Radar, Ultraschall, Lichtschranke bzw. Funksignalen bei Annäherung einer Person eine Hinterleuchtung in Betrieb setzt, die mittels einer Zeitsteuerung selbsttätig wieder abschaltbar ist. Die Elektronik kann auch eine audiovisuelle Informationsausgabe umfassen.

Die Bedienung läuft im einfachsten Falle automatisch ab, wobei beim Betreten eine Gewichtsänderung mittels der Auswerteelektronik der Steuerungseinrichtung erfasst und ein Messvorgang eingeleitet wird. Damit kann auch eine integrierte Lichtsteuerung und gegebenenfalls aktive Massage in Gang gesetzt werden. Alternativ kann die Steuerungseinrichtung aufwändiger für unterschiedliche Steuerungsaufgaben ausgelegt sein, wie z. B. einer zusätzlichen Temperatursteuerung und der Möglichkeit, verschiedene Steuerungsprogramme auszuwählen. Auch kann ein lageabhängiger Betrieb der Gewichtssensorik und/oder der Hinterleuchtung vorgesehen sein.

Die Energieversorgung wird vorteilhaft mittels Batterien oder Akkus verwirklicht. Alternativ oder zusätzlich können auch Energiegewinnungseinheiten vorgesehen sein, die Licht-, Bewegungs- oder Wärmeenergie nutzen und in elektrische Energie für die Versorgung der Waage und ihrer Zusatzfunktionen sammeln und bereit stellen. Alternativ oder zusätzlich kann eine Netzspannungsversorgung vorgesehen sein.

## Patentansprüche

1. Haushaltswaage mit einer eine Gewichtssensorik (41) und eine Plattform (100) für ein Wiegegut aufweisenden Tragstruktur,
**dadurch gekennzeichnet,**
**dass** die Plattform (100) zumindest bereichsweise aus nach außen optisch und/oder fühlbar in Erscheinung tretendem steinartigem Material gebildet ist.

2. Haushaltswaage nach Anspruch 1,
**dadurch gekennzeichnet,**
**dass** die Plattform (100) aus einem einzelnen Stein oder einer Vielzahl von Steinen gebildet ist.

3. Haushaltswaage nach Anspruch 2,
**dadurch gekennzeichnet,**
**dass** gleiche oder verschiedenartige Steine in einem ausgehärteten Bindemittel einen festen Verbund miteinander bilden.

4. Haushaltswaage nach einem der vorhergehenden Ansprüche,
**dadurch gekennzeichnet,**
**dass** es sich bei dem steinartigen Material um natürliche Steine oder um künstliches steinartiges Material oder um ein Gemisch aus natürlichen Steinen und künstlichem steinartigem Material handelt.

5. Haushaltswaage nach einem der vorhergehenden Ansprüche,
**dadurch gekennzeichnet,**
**dass** in der Plattform (100) Steine unterschiedlichen Materials, unterschiedlicher Größe und/oder unterschiedlicher Oberflächenstruktur enthalten sind.

6. Haushaltswaage nach einem der vorhergehenden Ansprüche,
**dadurch gekennzeichnet,**
**dass** in der Plattform (100) unterschiedliche Zonen ohne Steine und mit Steinen oder mit verschiedenen Steinstrukturen ausgebildet sind.

7. Haushaltswaage nach einem der vorhergehenden Ansprüche,
**dadurch gekennzeichnet,**
**dass** die Steine zur Lichtlenkung genutzt sind.

8. Haushaltswaage nach einem der vorhergehenden Ansprüche,
**dadurch gekennzeichnet,**
**dass** die Plattform (100) mit elektrisch leitenden Strukturen versehen ist.

9. Haushaltswaage nach Anspruch 8,
**dadurch gekennzeichnet,**
**dass** die elektrisch leitenden Strukturen Leitungen zu Elektroden zur Erfassung physiologischer Parameter, Leitungen zu Vibrationselementen, Leitungen zu Wärmeerzeugungselementen und/oder Leitungen zu Lichterzeugungselementen umfassen, wobei die Elektroden, Vibrationselemente, Wärmeerzeugungselemente und/oder die Lichterzeugungselemente ebenfalls in der Plattform (100) angeordnet sind.

10. Haushaltswaage nach Anspruch 1, 4, 5, 6 oder 7,
**dadurch gekennzeichnet,**
**dass** das steinartige Material lose in einer Aufnahme aufgenommen ist, die von einer stabilen Tragplatte (120) flächig abgestützt ist.

11. Haushaltswaage nach einem der vorhergehenden Ansprüche,
**dadurch gekennzeichnet,**
**dass** eine Verteilung unterschiedlichen steinartigen Materials entsprechend Reflexzonen von Füßen vorgenommen ist.

12. Haushaltswaage nach einem der vorhergehenden Ansprüche,
**dadurch gekennzeichnet,**
**dass** die Plattform (100) auf ihrer das Wiegegut aufnehmenden Oberseite mit einer glatten Beschichtung versehen ist.

13. Haushaltswaage nach einem der vorhergehenden Ansprüche,
**dadurch gekennzeichnet,**
**dass** die Plattform (100) auf der Tragstruktur austauschbar gehalten ist.

14. Haushaltswaage nach einem der vorhergehenden Ansprüche,
**dadurch gekennzeichnet,**
**dass** ein Anzeigebereich (110) in die Plattform (100) integriert ist.
